**Europäisches Patentamt**

**European Patent Office**

**Office européen des brevets**

(19)

(11) **EP 0 928 800 A1**

(12) **EUROPÄISCHE PATENTANMELDUNG**

(43) Veröffentlichungstag:
**14.07.1999 Patentblatt 1999/28**

(51) Int. Cl.[6]: **C08G 18/81**, C08G 18/67,
C09D 175/16

(21) Anmeldenummer: **98124801.6**

(22) Anmeldetag: **29.12.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **09.01.1998 DE 19800528**

(71) Anmelder:
**Bayer Aktiengesellschaft
51368 Leverkusen (DE)**

(72) Erfinder:
- **Fischer, Wolfgang Dr.
  40668 Meerbusch (DE)**
- **Engbert, Theodor Dr.
  50968 Köln (DE)**
- **Bock, Manfred Dr.
  51375 Leverkusen (DE)**

(54) **Beschichtungssystem aus UV-härtenden Isocyanatgruppen aufweisenden Urethan(meth)acrylatisocyanaten**

(57) Die Erfindung betrifft ein Beschichtungssystem, bei dem durch UV-Härtung von (Meth)Acryloylgruppen enthaltenden Bestandteilen trockene, handhabbare Oberflächen entstehen und danach durch Vernetzung von NCO-Gruppen enthaltenden Bestandteilen mit aktiven Wasserstoff enthaltenden Bestandteilen die gewünschten Eigenschaften erzeugt werden, dadurch gekennzeichnet, daß eine Bindemittelkomponente sowohl (Meth)Acryloylgruppen als auch freie NCO-Gruppen aufweist und die Beschichtung nach Härtung auch an nicht oder schlecht belichteten Stellen ausreichende Resistenz aufweist.

**Beschreibung**

Die Erfindung betrifft ein Beschichtungssystem, bei dem durch UV-Härtung von (Meth)Acryloylgruppen enthaltenden Bestandteilen trockene, handhabbare Oberflächen entstehen und danach durch Vernetzung von NCO-Gruppen enthaltenden Bestandteilen mit aktiven Wasserstoff enthaltenden Bestandteilen die gewünschten Eigenschaften erzeugt werden, dadurch gekennzeichnet, daß eine Bindemittelkomponente sowohl (Meth)Acryloylgruppen als auch freie NCO-Gruppen aufweist und die Beschichtung nach Härtung auch an nicht oder schlecht belichteten Stellen ausreichende Resistenz aufweist.

Die Härtung von (Meth)Acryloylgruppen aufweisenden Beschichtungssystemen durch UV-initiierte, radikalische Polymerisation ist bekannt und technisch etabliert. Sie ist eine der schnellsten Härtungsmethoden in der Beschichtungstechnologie. UV-härtende Lacke weisen jedoch durchaus Nachteile auf, wie z.B. hohen Volumenschrumpf bei der Härtung, was zu Haftungsproblemen führen kann. Die systemimmanente hohe Vernetzungsdichte führt zu Sprödigkeit, mangelnder Elastizität und mangelnder Schlagzähigkeit. Desweiteren ist die Aushärtung von UV-härtenden (Meth)Acryloylgruppen aufweisenden Beschichtungssystemen an die Verfügbarkeit einer ausreichenden Strahlendosis entsprechender Wellenlänge gebunden. Schlecht belichtete Bereiche härten nur in reduziertem Ausmaß, was zu empfindlichen Verlusten in der Oberflächenresistenz führt, nicht belichtete Bereiche härten überhaupt nicht.

Beschichtungen auf Basis von Polyisocyanaten und aktiven Wasserstoff enthaltenden Bestandteilen, vorzugsweise Polyolen oder sterisch gehinderten Polyaminen sind durch die breite Auswahl der Reaktionspartner in ihren technischen Eigenschaften wie Haftung, Elastizität, Schlagzähigkeit und Wetterstabilität in einem weiteren Bereich variierbar. Die Aushärtung entsprechender Beschichtungen erfordert im Vergleich zu strahlenhärtenden Systemen jedoch eine lange Zeitspanne und vorzugsweise hohe Temperaturen, ist jedoch in keiner Weise an die Anwesenheit von Licht gebunden.

Kombinationen beider Härtungsarten sind als sogenannte dual cure Systeme ebenfalls bekannt. So beschreibt z.B. die US-A 4 342 793 härtbare Harzzusammensetzungen aus einem strahlenhärtbaren Reaktivverdünnter, das sind niedermolekulare Acrylsäureester, einem gesättigten Polyol und einem Polyisocyanat. Die Härtung erfolgt durch Bestrahlung um den Reaktivverdünner zu polymerisieren und danach durch thermische Härtung zur Bildung eines Polyurethans aus dem Polyol und dem Polyisocyanat.

Der Nachteil solcher Systeme besteht darin, daß bei ungünstiger Bestrahlung nicht eingebauter Reaktivverdünner im gehärteten Lackfilm zurückbleiben kann. Dieser kann wegen seiner potentiellen Extrahierbarkeit zu physiologischen Problemen bei Hautkontakt mit dem Lackfilm führen, desweiteren beeinflußt er die Eigenschaften des Lackfilms wie z.B. Härte, physikalische und chemische Resistenz negativ.

Die Aufgabe der vorliegenden Erfindung bestand nun darin, ein Beschichtungssystem zur Verfügung zu stellen, das durch UV-Härtung schnelle Handhabbarkeit der lackierten Teile zuläßt, sowie durch Vernetzung von NCO-Gruppen aufweisenden Bestandteilen mit aktiven Wasserstoffatomen aufweisenden Bestandteilen, vorzugsweise Polyolen und/oder sterisch gehinderten Polyaminen, ein anwendungsgerechtes Eigenschaftsprofil einstellbar macht und eine ausreichende Härtung auch auf nicht oder schlecht belichteten Bereichen ermöglicht.

Überraschenderweise wurde gefunden, daß in Beschichtungssystemen, die im wesentlichen bestehen aus Urethan(Meth)acrylaten mit (Meth)Acryloylgruppen und freien NCO-Gruppen, Polyisocyanaten und Polyolen nach UV-Härtung, die zu trockenen, handhabbaren Lackfilmen führt, die Vernetzung durch NCO-Reaktion komplett abläuft und zu Oberflächen hoher chemischer und mechanischer Resistenz führt, andererseits bei schlechter Belichtungssituation und einer gewissen Restdoppelbindungsdichte die Vernetzung über NCO-Reaktion ein minimal erforderliches Resistenzniveau gewährleistet. Dies war umso überraschender, da davon auszugehen war, daß beide Reaktionsabläufe sich gegenseitig behindern und die schnelle UV-initiierte Polymerisation die deutlich langsamere Reaktion an den NCO-Gruppen gleichsam "einfriert", da diese nicht mehr mit aktiven Wasserstoff enthaltenden Komponenten reagieren.

Gegenstand der Erfindung sind Beschichtungssysteme aus

a) einem Urethan(meth)acrylat, das (Meth)Acryloylgruppen und freie Isocyanatgruppen aufweist,

b) gegebenenfalls einem weiteren Polyisocyanat,

c) einem, die radikalische Polymerisation initiierenden UV-Initiator und

d) einer oder mehreren mit Isocyanaten reaktiven Verbindung.

Vorzugsweise wird das vorliegende Beschichtungssystem in zwei Komponenten hergestellt, wobei die Komponente I) die Bestandteile ((a)+(b)) enthält, die zweite Komponente II) die Bestandteile ((c)+(d)).

Zur Erzielung von Wetterstabilität kann der Komponente II) zugegeben werden gegebenenfalls

e) ein UV-Absorber mit einem Absorptionsbereich bis maximal 390 nm und

f) ein HALS-Stabilisator
und/oder der Komponente II) gegebenenfalls

g) übliche Lackadditive wie Verlaufs- oder Entlüftungsmittel und

h) Katalysatoren zur Beschleunigung der NCO-Reaktion.

Komponente I) und II) können zur Verdünnung jeweils ein im Sinne der Vernetzung inertes Lösungsmittel enthalten.

Komponente I) und Komponente II) werden so kombiniert, daß ein Verhältnis von NCO-Gruppen und mit NCO-reaktiven Gruppen von 2 zu 1 bis 0,8 zu 1, vorzugsweise 1,2 zu 1 bis 0,8 zu 1, besonders vorzugsweise von 1 zu 1 eingestellt wird.

Verbindungen gemäß a) werden hergestellt aus (Meth)Acryloylgruppen aufweisenden einwertigen Alkoholen und Di- oder Polyisocyanaten. Herstellverfahren für Urethan(meth)acrylate sind grundsätzlich bekannt und beschrieben (z.B. DE-A 16 44 798, DE-A 21 15 373, DE-A 27 37 406). Für die erfindungsgemäßen, freie Isocyanatgruppen aufweisenden Urethanmethacrylate ist das Verhältnis von NCO-Gruppen zu OH-Gruppen von 1:0,2 bis 1:0,8 Val, vorzugsweise von 1:0,3 bis 1:0,6 Val.

Unter (Meth)Acryloylgruppen aufweisenden einwertigen Alkoholen sind sowohl eine freie Hydroxylgruppe aufweisende Ester der Acrylsäure oder Methacrylsäure mit zweiwertigen Alkoholen zu verstehen wie beispielsweise 2-Hydroxyethyl-, 2- oder 2-Hydroxypropyl oder 2-, 3- oder 4-Hydroxybutyl-(meth)acrylat als auch beliebige Gemische aus derartigen Verbindungen. Außerdem kommen auch einwertige (Meth)Acryloylgruppen aufweisende Alkohole oder im wesentlichen aus derartigen Alkoholen bestehende Umsetzungsprodukte in Betracht, die durch Veresterung von n-wertigen Alkoholen mit (Meth)Acrylsäure erhalten werden, wobei als Alkohole auch Gemische von unterschiedlichen Alkoholen eingesetzt werden können, so daß n für eine ganze oder in statistische Mittel gebrochene Zahl von größer 2 bis 4, vorzugsweise 3 steht, und wobei pro Mol der genannten Alkohole von (n-0,8) bis (n-1,2), vorzugsweise (n-1) Mol (Meth)Acrylsäure eingesetzt werden. Zu diesen Verbindungen bzw. Produktgemischen gehören beispielsweise die Umsetzungsprodukte von i) Glycerin, Trimethylolpropan und/oder Pentaerythrit, von niedermolekularen Alkoxylierungsprodukten derartiger Alkohole, wie beispielsweise ethoxyliertem oder propoxyliertem Trimethylolpropan, wie beispielsweise dem Anlagerungsprodukt von Ethylenoxid an Trimethylolpropan der OH-Zahl 550 oder von beliebigen Gemischen derartiger mindestens dreiwertiger Alkohole mit zweiwertigen Alkoholen wie beispielsweise Ethylenglykol oder Propylenglykol mit (ii) (Meth)Acrylsäure im genannten Molverhältnis.

Diese Verbindungen weisen ein mittleres Molekulargewicht $\overline{M}n$ von 116 bis 1000, vorzugsweise von 116 bis 750 und besonders bevorzugt von 116 bis 158 auf.

Als Di- oder Polyisocyanate sind grundsätzlich alle Produkte geeignet, wobei aliphatische Produkte bevorzugt sind, z. B. Butylendiisocyanat, Hexamethylendiisocyanat, Trimethylhexamethylendiisocyanat (=2,2,4- und/oder 2,4,4-Trimethylhexamethylendiisocyanat), Neopentyldiisocyanat, Isophorondiisocyanat, Dicyclohexylmethandiisocyanat, sowie deren Derivate mit Urethan-, Allophanat-, Isocyanurat-, Biuret-, Uretdionstrukur und Mischungen derselben. Geeignet sind auch Urethangruppen aufweisende Diisocyanate aus Diisocyanaten und zweiwertigen Alkoholen.

Die beschriebene Additionsreaktion kann in an sich bekannter Weise mittels geeigneter Katalysatoren, wie beispielsweise Zinnoctoat, Dibutylzinndilaurat oder tertiären Aminen beschleunigt werden.

Das resultierende, freie NCO-Gruppen aufweisende Urethan(meth)acrylat muß gegen vorzeitige Polymerisation stabilisiert werden, durch Zugabe geeigneter Inhibitoren und Antioxidantien wie beispielsweise Phenole, Hydrochinone, gegebenenfalls auch Chinonen wie z.B. 2,5-Di-tert.-butylchinon.

Diese Inhibitoren werden in Mengen von jeweils 0,001 bis 0,3 Gew.-% während oder im Anschluß an die Herstellung zugegeben.

Die Produkte können in, im Sinne der Herstellung und späteren Verwendung, inerten Lösemitteln hergestellt werden.

Als b) aufgeführte weitere Polyisocyanate sind bevorzugt Polyisocyanate auf Basis von Hexamethylendiisocyanat, Trimethylhexamethylendiisocyanat oder Isophorondiisocyanat, die Isocyanuratgruppen, Allophanatgruppen, Biuretgruppen oder Uretdiongruppen bzw. Mischungen dieser Gruppen aufweisen können.

UV-Initiatoren entsprechend c) können sein 2-Hydroxyphenylketone wie z.B. 1-Hydroxy-cyclohexyl-phenylketon, Benzilketale wie z.B. Benzildimethylketal, Acylphosphinoxide wie z.B. Bis-(2,4,6-trimethylbenzoyl)-phenylphosphinoxid, Benzophenon und dessen Derivate bzw. Mischungen aus den verschiedenen UV-Initiatortypen.

Mit Isocyanaten reaktive Verbindungen entsprechend d) sind Polyole. Diese können durch Veresterung von Di- oder Triolen mit Dicarbonsäuren erhalten werden. Desweiteren sind geeignet hydroxyfunktionelle Copolymere, hergestellt im wesentlichen aus (Meth)Acrylsäureestern, Hydroxyalkyl(meth)acrylsäureestern und gegebenenfalls Styrol und/oder anderer Monomeren wie z.B. Acrylnitril, weiterhin Polyetherpolyole wie sie z. B. durch Alkoxylierung von Di- und Polyolen erhalten werden. Als weitere mit Isocyanaten reaktive Verbindungen kommen sterisch gehinderte Amine, wie sie durch Addition von Maleinsäureester an cycloaliphatische, primäre Diamine entstehen, in Betracht.

Zur Wetterstabilität der gehärteten Lackschicht kann vorzugsweise der Komponente II) entsprechend e) und f) ein UV-Absorber mit einem Absorptionsbereich bis maximal -390 nm und ein HALS-Stabilisator zugegeben werden. Geeignete UV-Absorber sind vom Triphenyltriazintyp z.B. Tinuvin® 400 (Ciba) oder vom Typ der Oxalsäuredianilide z.B. Sanduvor® 3206 (Clariant). Die UV-Absorber werden vorzugsweise in Mengen von jeweils 0,5 bis 3,5 % bezogen auf festes Bindemittel zugegeben.

Geeignete HALS-Stabilisatoren sind die handelsüblichen Typen wie z.B. Tinuvin® 292 oder Tinuvin® 123 (Ciba) oder Sanduvor® 3058 (Clariant). Diese HALS-Stabilisatoren werden bevorzugt in Mengen von 0,5 bis 2,5 % bezogen auf festes Bindemittel zugegeben.

Als Lackadditive gemäß g) seien beispielhaft genannt: Entlüftungsmittel wie Polyacrylate und Verlaufsmittel wie Polysiloxane.

Geeignete Lösemittel sind Lösemittel, die gegenüber Isocyanatgruppen und C=C-Doppelbindungen inert sind, z.B. Ester, Ketone, Ether, Etherester, Alkane, oder aromatische Lösemittel wie Xylole oder Toluol.

Werden alle Bestandteile des erfindungsgemäßen Beschichtungssystems als eine Komponente formuliert weist das System ein pot-life auf. Daher ist eine bevorzugte Formulierungsform ein zweikomponentiges System, wobei Komponente I) die Bestandteile a und b enthält, die Komponente II) die Bestandteile c und d gegebenenfalls alle Bestandteile von e bis h. Die jeweiligen Komponenten sind dann analog der Lagerfähigkeit der Bestandteile lagerstabil. Beide Komponenten werden vor der Applikation im angegebenen Verhältnis gemischt oder über sogenannte Zweikomponentenanlagen appliziert.

Das erfindungsgemäße Beschichtungssystem kann bevorzugt über Spritz-, Gieß- oder Walzapplikation aufgetragen werden.

Die Aushärtung kann erfolgen:

1. gegebenenfalls durch Ablüftung zugegebener Lösemittel. Dies erfolgt bei Raumtemperatur gegebenenfalls erhöhter Temperatur, vorzugsweise bis 80°C,

2. durch UV-Härtung, geeignet sind handelsübliche Quecksilber-Hoch- bzw. Mitteldruckstrahler, diese Strahler können durch andere Elemente dotiert sein und weisen bevorzugt eine Leistung von 80 bis 240 W/cm Lampenlänge auf,

3. durch Vernetzung der NCO-haltigen Bestandteile mit den mit NCO-haltigen Bestandteilen reaktiven Bestandteilen. Dies kann bei Raumtemperatur oder erhöhter Temperatur, vorteilhaft bis 150°C erfolgen. Ein bevorzugtes Aushärtungsverfahren besteht darin, daß die Reaktion der NCO-haltigen Bestandteile teilweise während der UV-Härtung (Bestrahlung) durch erhöhte Temperatur (10° bis 50°C über Reaktionstemperatur) bzw. längerer UV-Bestrahlungszeit (Belichtungszeit) bei unveränderter Temperatur abläuft.

## Beispiele

## Beispiel 1

Herstellung eines erfindungsgemäßen Urethanacrylatisocyanates:

In einem Rührkessel, ausgerüstet mit Thermoelement, Tropftrichter, Rückflußkühler, Gaszuführung und Gasabführung werden 1268,7 g eines HDI-Isocyanurates mit 23 % NCO-Gehalt, 383,9 g Methoxypropylacetat, 0,96 g Dibutylzinndilaurat und 1,92 g 2,6-Di-tert.-butylkresol eingewogen. Unter Rühren wird das dreifache Kesselvolumen Luft pro Stunde durchgeleitet und das sechsfache Kesselvolumen Stickstoff pro Stunde übergeleitet. Es wird auf 50°C aufgeheizt und ab 50°C 266,8 g Hydroxyethylacrylat so zugetropft, daß man mit der exothermen Reaktion die Temperatur auf maximal 60°C ansteigt. Nach kompletter Zugabe des Hydroxyethylacrylats, Dauer ca. 6 bis 8 Stunden, wird noch eine Stunde bei 60°C nachgerührt. Es entsteht eine Urethanacrylatlösung mit einem NCO-Gehalt von 9,2 % und einer Viskosität von 1.070 mPa.s (23°C).

**Beispiel 2**

Herstellung, Applikation und Prüfung eines erfindungsgemäßen Beschichtungssystems

Es wird ein Lack hergestellt aus Komponente 1 und Komponente 2, so daß ein Verhältnis von OH zu NCO von 1,0 entsteht.

Komponente 1:   Urethanacrylatlösung gemäß Beispiel 1

Komponente 2:   Hydroxygruppenhaltiges Polyacrylat ca. 70 % in Butylacetat, ca. 3 % OH (Desmophen® A VP LS 2009/1, Bayer AG) 1 % Sanduvor® 3058 (Clariant), bezogen auf Bindemittel fest 2,5 % Sanduvor® 3206 (Clariant), bezogen auf Bindemittel fest 5 % Irgacure® 184 (Ciba), bezogen auf Festkörper der Komponente 1

Zur Applikation wird die Mischung mit Methoxypropylacetat auf 30% Festkörper verdünnt und mit einer 1,5 mm Düse bei 3 bar auf eine, mit einem pigmentierten, 2-Komponenten-Polyurethanlack vorbeschichtete Metallplatte appliziert, so daß eine Filmdicke von ca. 120 g/m$^2$ resultiert.
Die so hergestellten nassen Schichten wurden auf 3 verschiedene Arten gehärtet:

2a) 30 min., 130°C

2b) 10 min., 60°C; UV-Härtung (1 m/min Bandgeschwindigkeit, 1 Hg-Hochdruckstrahler 80 W/cm, 10 cm Strahlerabstand); 30 min, 130°C

2c) 10 min., 60°C; UV-Härtung wie Pkt. 2b; Nachhärtung bei Raumtemperatur

Geprüft wurde die resultierende Härte durch Pendeldämpfung nach König, sowie die Resistenz gegen Lösemittel und gegen 1 %ige Schwefelsäure. Das Ergebnis zeigt folgende Tabelle.

| Härtungsart | 2a | | 2b | | 2c | |
|---|---|---|---|---|---|---|
| Pendeldämpfung nach König, s | 71 | | 140 | | 90 nach 30 min. | |
| | | | | | 110 nach 1 d | |
| | | | | | 120 nach 2 d | |
| | | | | | 140 nach 7 d | |
| | | | | | Lagerung bei Raumtemperatur | |
| Lösemittelresistenz | Einwirkzeit | | Einwirkzeit | | Einwirkzeit | |
| | 1 min | 5 min | 1 min | 5 min | 1 min | 5 min |
| Xylol | 2 | 3 | 0 | 0 | 0* | 0* |
| Methoxypropylacetat | 2 | 3 | 0 | 0 | 0* | 0* |
| Ethylacetat | 3 | 3 | 0 | 2 | 0* | 0* |
| Aceton | 3 | 3 | 1 | 3 | 1* | 2* |
| Resistenz gegen 1 %ige H$_2$SO$_4$, erste Schädigung (brauner Rand) bei | 36°C | | 46°C | | 46°C | |

   * Zustand nach 7 d Raumtemperaturlagerung

Hinsichtlich Lösemittelresistenz bedeutet:

0 = unverändert
1 = Spur verändert
2 = gering verändert
3 = mittel verändert
4 = stark verändert
5 = gelöst/zerstört

**Patentansprüche**

1. Beschichtungssysteme aus

   a) einem Urethan(meth)acrylat, das (Meth)Acryloylgruppen und freie Isocyanatgruppen aufweist,

   b) gegebenenfalls einem weiteren Polyisocyanat,

   c) einem, die radikalische Polymerisation initiierenden UV-Initiator und

   d) einer oder mehreren mit Isocyanaten reaktiven Verbindung.

2. Beschichtungssystem nach Anspruch 1, dadurch gekennzeichnet, daß das Beschichtungssystem in zwei Komponenten aus Komponente I) ((a)+(b)) und Komponente II) ((c)+(d)) hergestellt wird.

3. Isocyanathaltige Urethan(meth)acrylate gemäß Anspruch 1 und 2, hergestellt aus (Meth)Acryloylgruppen aufweisenden einwertigen Alkoholen und mehrwertigen Isocyanaten, dadurch gekennzeichnet, daß das Verhältnis von NCO-Gruppen zu OH-Gruppen 1:0,2 Val bis 1:0,8 Val beträgt.

4. Beschichtungssysteme gemäß Anspruch 1 und 2, dadurch gekennzeichnet, daß die mit Isocyanat reaktive Verbindung ein Polyol ist.

5. Beschichtungssystem gemäß Anspruch 1 und 2, dadurch gekennzeichnet, daß eine weitere mit Isocyanat reaktive Verbindung ein sterisch gehindertes, sekundäres, mehrwertiges Amin ist.

6. Beschichtungssysteme gemäß Anspruch 1 und 2, dadurch gekenneichnet, daß ein UV-Absorber mit einem Absorptionsbereich bis 390 um enthalten ist.

7. Beschichtungssystem gemäß Anspruch 1 und 2, dadurch gekennzeichnet, daß ein HALS-Amin enthalten ist.

8. Verfahren zur Herstellung von Überzügen mit einem Beschichtungssystem gemäß Anspruch 1 und 2, dadurch gekennzeichnet, daß durch UV-initiierte radikalische Polymerisation handhabbare Oberflächen und durch darauf folgende NCO-Reaktion die Endeigenschaften entstehen.

**Europäisches Patentamt**

## EUROPÄISCHER RECHERCHENBERICHT

Nummer der Anmeldung

EP 98 12 4801

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | JOURNAL OF APPLIED POLYMER SCIENCE, Bd. 62, 1996, Seiten 1011-1021, XP000643285 * Seite 1011, Spalte 2, Zeile 15 - Seite 1013, Spalte 1, Zeile 15 * --- | 1-4,6,8 | C08G18/81 C08G18/67 C09D175/16 |
| X | EP 0 210 339 A (DESOTO) 4. Februar 1987 * Seite 2, Zeile 19 - Seite 11, Zeile 35; Anspruch 1; Beispiel 1 * --- | 1,4,8 | |
| X | FR 2 361 450 A (BASF) 10. März 1978 * Seite 1, Zeile 31 - Seite 11, Zeile 5; Ansprüche 1-7; Beispiele 1,3 * --- | 1,4 | |
| A | EP 0 015 593 A (HÜLS) 17. September 1980 * Seite 1, Zeile 6 - Seite 9, Zeile 22; Anspruch 1; Beispiel 1 * --- | 1 | |
| A | EP 0 206 158 A (SIEMENS) 30. Dezember 1986 * Seite 2, Spalte 2, Zeile 1 - Seite 8, Spalte 13, Zeile 16 * --- | 1,3,4 | RECHERCHIERTE SACHGEBIETE (Int.Cl.6) |
| A | EP 0 173 085 A (DENTSPLY) 5. März 1986 * Seite 4, Zeile 6 - Seite 14, Zeile 12; Ansprüche 1-11; Beispiele 1,3 * ----- | 1-4 | C08G C09D |

Der vorliegende Recherchenbericht wurde für alle Patentansprüche erstellt

| Recherchenort | Abschlußdatum der Recherche | Prüfer |
|---|---|---|
| DEN HAAG | 19. April 1999 | Bourgonje, A |

**ANHANG ZUM EUROPÄISCHEN RECHERCHENBERICHT
ÜBER DIE EUROPÄISCHE PATENTANMELDUNG NR.**

EP 98 12 4801

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-04-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 210339 | A | 04-02-1987 | US | 4690501 A | 01-09-1987 |
| | | | JP | 62012640 A | 21-01-1987 |
| FR 2361450 | A | 10-03-1978 | DE | 2636426 A | 16-02-1978 |
| | | | DE | 2636428 A | 16-02-1978 |
| | | | BE | 857748 A | 13-02-1978 |
| | | | GB | 1583413 A | 28-01-1981 |
| | | | JP | 53023330 A | 03-03-1978 |
| | | | NL | 7708834 A | 15-02-1978 |
| | | | US | 4239866 A | 16-12-1980 |
| EP 15593 | A | 17-09-1980 | DE | 2905205 A | 14-08-1980 |
| | | | JP | 1047460 B | 13-10-1989 |
| | | | JP | 1563332 C | 12-06-1990 |
| | | | JP | 55108417 A | 20-08-1980 |
| | | | US | 4330657 A | 18-05-1982 |
| EP 206158 | A | 30-12-1986 | AT | 60926 T | 15-03-1991 |
| | | | DK | 293286 A | 25-12-1986 |
| | | | FI | 862042 A,B, | 25-12-1986 |
| | | | JP | 61296029 A | 26-12-1986 |
| | | | US | 4732951 A | 22-03-1988 |
| EP 173085 | A | 05-03-1986 | AU | 587783 B | 31-08-1989 |
| | | | AU | 4562985 A | 06-02-1986 |
| | | | BR | 8503585 A | 29-04-1986 |
| | | | CA | 1312402 A | 05-01-1993 |
| | | | DE | 3587844 D | 14-07-1994 |
| | | | DE | 3587844 T | 02-02-1995 |
| | | | JP | 1965529 C | 25-08-1995 |
| | | | JP | 6099537 B | 07-12-1994 |
| | | | JP | 61095019 A | 13-05-1986 |
| | | | US | 5177120 A | 05-01-1993 |
| | | | US | 4813875 A | 21-03-1989 |

EPO FORM P0461

Für nähere Einzelheiten zu diesem Anhang : siehe Amtsblatt des Europäischen Patentamts, Nr. 12/82